Europäisches Patentamt

European Patent Office

Office européen des brevets

(19)

(11) **EP 1 427 189 A1**

(12) **DEMANDE DE BREVET EUROPEEN**

(43) Date de publication:
**09.06.2004 Bulletin 2004/24**

(51) Int Cl.⁷: **H04N 5/217**

(21) Numéro de dépôt: **03104363.1**

(22) Date de dépôt: **25.11.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **27.11.2002 FR 0214882**

(71) Demandeur: **Commissariat A L'Energie Atomique
75752 Paris 15ème (FR)**

(72) Inventeurs:
 • **Arques, Marc
  38100 Grenoble (FR)**
 • **Bardet, Anthony
  36260 Paudy (FR)**

(74) Mandataire: **Poulin, Gérard
Société BREVATOME
3, rue du Docteur Lancereaux
75008 Paris (FR)**

(54) **Détecteur de particules et procédé de détection de particules associé**

(57) L'invention concerne un détecteur de particules comprenant des moyens de comptage (4).
Le détecteur comprend :

- des moyens (7b) pour créer, à partir d'une particule détectée, une impulsion électrique (Vb) constituant un signal d'inhibition d'au moins un détecteur voisin pour empêcher que le détecteur voisin ne détecte les mêmes particules que celles qu'il détecte, et

- des moyens (8, 9) permettant d'inhiber la détection de particules sous l'action d'un signal d'inhibition provenant d'au moins un détecteur voisin.

L'invention s'applique, entre autres, dans le domaine de la radiologie (radiographie, radioscopie).

FIG. 3

EP 1 427 189 A1

**Description**

Domaine technique et art antérieur

L'invention concerne un détecteur de particules qui délivre une information de comptage relative à un nombre de particules détectées ainsi qu'un dispositif de comptage de particules comprenant une pluralité de détecteurs de particules.

L'invention concerne également un procédé de lecture de matrice de détecteurs de particules selon l'invention.

L'invention s'applique, entre autres, dans le domaine de la radiologie (radiographie, radioscopie). Les particules détectées sont alors des rayons X.

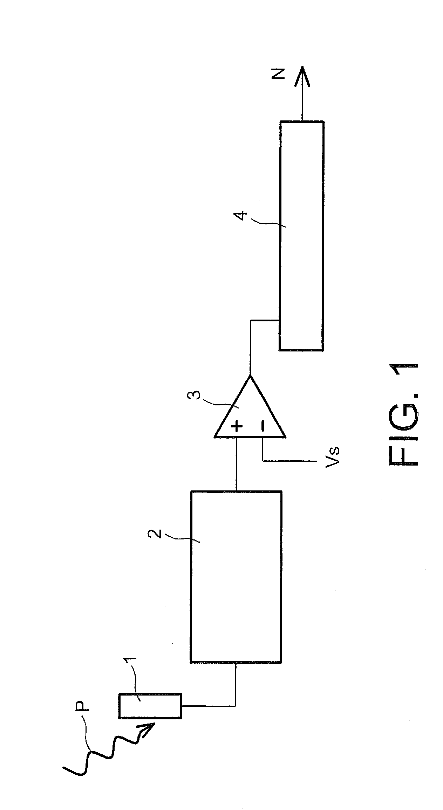

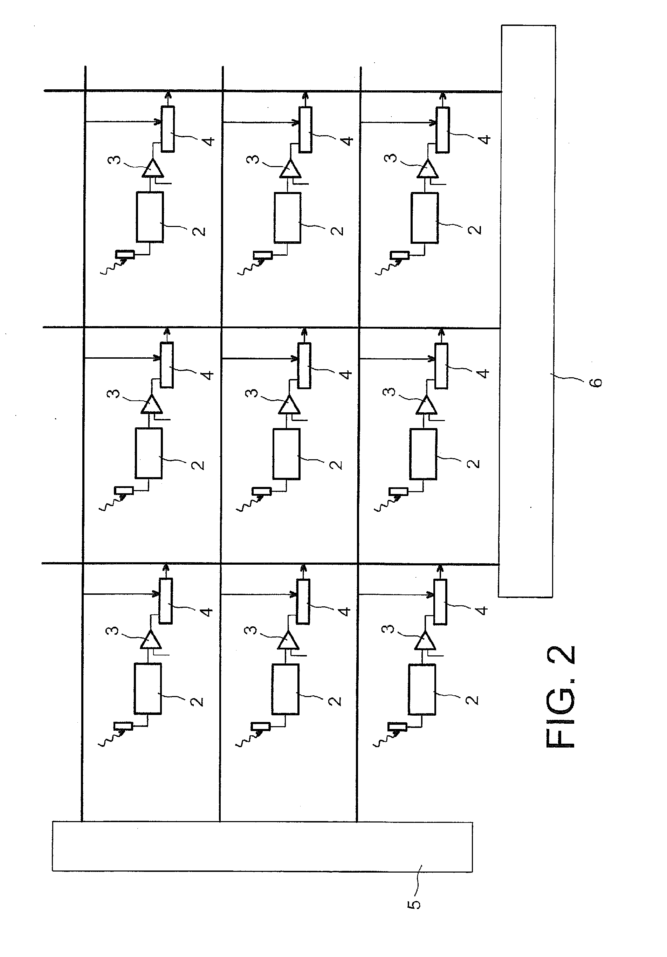

Les détecteurs de rayons X comprennent un élément qui absorbe les rayons X et transforme ces derniers en impulsions électriques. Dans les détecteurs matriciels en comptage, ces impulsions électriques sont traitées (amplifiées, filtrées,...), puis transmises à un comparateur qui délivre une impulsion électrique numérique pour chaque particule détectée. La figure 1 représente un détecteur de particules selon l'art connu et la figure 2 représente un dispositif de comptage de particules comprenant une pluralité de détecteurs de particules selon l'art connu.

Le détecteur de particules, également appelé « pixel détecteur », représenté en figure 1 comprend un élément 1 qui absorbe les particules, un circuit de traitement 2, un comparateur 3 et un compteur 4. L'élément 1 comprend une ou plusieurs couches de détection qui absorbent les particules P, par exemple des rayons X, et transforment celles-ci en impulsions électriques. L'élément 1 peut être, par exemple, un élément semi-conducteur, un gaz, un scintillateur associé à un semi-conducteur, etc. Le circuit de traitement 2 traite les impulsions électriques (amplification, filtrage, etc.) et le comparateur 3 compare chaque impulsion électrique issue du circuit de traitement 2 à une tension de seuil Vs. Le comparateur 3 délivre ainsi une impulsion électrique numérique à partir de l'impulsion électrique issue du circuit de traitement 2. Les impulsions électriques numériques incrémentent le compteur 4. A la fin de l'irradiation, le compteur 4 contient une information représentative du nombre N de particules détectées.

La figure 2 représente un dispositif de comptage de particules comprenant une pluralité de détecteurs de particules selon l'art connu. Le dispositif de comptage est agencé sous forme matricielle (lignes et colonnes de détecteurs). Un registre 5 à décalage d'adressage de lignes commande, ligne par ligne, la lecture des compteurs 4. Les informations de comptage délivrées par le compteur 4 sont transmises, colonne par colonne, à un multiplexeur de colonne 6.

Pour chaque particule détectée dans l'élément semi-conducteur 1, le compteur 4 du détecteur de particules doit être incrémenté de 1. Ne pas incrémenter le compteur revient à ne pas utiliser la particule détectée et, partant, à dégrader la statistique et la qualité de l'image réalisée. Pour maintenir la qualité de l'image, il faut alors augmenter la dose délivrée au patient, ce qui n'est pas souhaitable.

De même, incrémenter simultanément les compteurs de deux pixels détecteurs voisins lorsqu'une seule particule est absorbée, revient à «inventer» une particule. En terme de qualité d'image, c'est tout aussi dommageable que de ne pas compter la particule.

Lorsqu'une particule est absorbée en un lieu proche de la frontière entre deux pixels détecteurs voisins, les charges délivrées peuvent se répartir dans les couches d'absorption des deux pixels voisins, principalement à cause de phénomènes de diffusion. Deux particules sont comptées alors qu'une seule devrait l'être. Ce problème se pose d'autant plus que les dimensions des pixels détecteurs sont petites, ce qui est le cas, par exemple, en mammographie. L'évolution des technologies conduisant à une miniaturisation des circuits, ce problème est destiné à se rencontrer de plus en plus souvent dans d'autres applications.

Une solution connue, qui fonctionne bien avec des sources de rayonnement synchrotron et avec des couches de détection en silicium ou en arséniure de gallium, consiste à régler le seuil du comparateur 3 au plus près d'une amplitude égale à la moitié de l'amplitude de l'impulsion électrique que génère la particule détectée. Dans ce cas, seul le pixel détecteur qui a collecté plus de la moitié des charges compte la particule. Cette solution résout de nombreux cas. Il reste cependant le problème des particules détectées très près de la frontière entre deux pixels voisins et le problème des dispersions de réglage.

Un autre inconvénient de cette solution consiste en ce qu'elle ne s'applique pas au domaine de la radiologie classique, et ceci pour deux raisons. Tout d'abord, les tubes générateurs de rayons X émettent un spectre continu d'énergie. Le rapport entre l'énergie maximale émise et l'énergie minimale émise est typiquement de 2 à 3. Cela n'a donc pas de sens de définir une amplitude moitié d'un photon « standard ». Ensuite, les matériaux détecteurs peuvent être des semi-conducteurs de qualité moindre que le silicium ou l'arséniure de gallium, tels que, par exemple, Se, CdTe, PbO, PbI2, HgI2, TlBr. Dans ces matériaux, les propriétés de transport des charges électroniques sont médiocres et la charge finalement lue dépend de la profondeur d'absorption du photon X dans la couche. Cette profondeur peut varier de façon importante et aléatoire d'un photon absorbé à l'autre. Dans ce cas également, cela n'a pas de sens de définir une amplitude moitié de l'amplitude d'un photon détecté.

L'invention ne présente pas ces inconvénients.

Exposé de l'invention

En effet, l'invention concerne un détecteur de particules comprenant des moyens pour délivrer une première impulsion électrique à partir d'une particule détectée et des moyens de comptage de premières impulsions électriques ainsi délivrées. Le détecteur comprend :

- des moyens pour créer, à partir d'une particule détectée, une deuxième impulsion électrique constituant un signal d'inhibition de détection transmis à au moins un détecteur voisin pour empêcher que le détecteur voisin ne détecte la particule détectée qui correspond à la première impulsion électrique délivrée, et
- des moyens permettant d'inhiber la détection de particules sous l'action d'un signal d'inhibition provenant d'au moins un détecteur voisin.

Selon une caractéristique supplémentaire de l'invention, les moyens pour inhiber la détection de particules comprennent :

- un premier interrupteur monté en amont des moyens de comptage, et
- un circuit de commande qui délivre un signal de commande du premier interrupteur en fonction de signaux d'inhibition provenant de détecteurs voisins.

Selon encore une caractéristique supplémentaire de l'invention, le circuit de commande est une porte logique « NON OU » ou « OU » sur les entrées de laquelle sont appliquées les signaux d'inhibition provenant de détecteurs voisins.

Selon encore une caractéristique supplémentaire, le détecteur comprend :

- des moyens pour empêcher la transmission du signal d'inhibition vers le détecteur voisin si la première impulsion électrique délivrée correspond à une énergie prédéterminée, et
- des moyens pour interdire le comptage de la première impulsion électrique délivrée qui correspond à l'énergie prédéterminée, sous l'action d'un signal d'inhibition issu d'un détecteur voisin et reçu dans une fenêtre temporelle de durée prédéterminée débutant avec la détection de la première impulsion électrique.

Selon encore une caractéristique supplémentaire, les moyens pour empêcher la transmission du signal d'inhibition vers le détecteur voisin comprennent :

- un deuxième interrupteur qui reçoit sur une première borne la deuxième impulsion électrique et dont une deuxième borne est reliée à au moins une entrée d'au moins un circuit de commande d'un détecteur voisin, et
- un circuit d'évaluation de l' énergie prédéterminée dont le signal de sortie constitue un signal de commande du deuxième interrupteur,

les moyens pour interdire le comptage de la première impulsion électrique délivrée (Va) comprenant des moyens de retard placés en amont du premier interrupteur.

Selon encore une caractéristique supplémentaire de l'invention, l'énergie prédéterminée est une énergie de photon de fluorescence.

Selon encore une caractéristique supplémentaire de l'invention, la deuxième impulsion électrique a une durée supérieure à la durée de la première impulsion électrique.

L'invention concerne également un dispositif de comptage de particules comprenant une pluralité de détecteurs particules selon l'invention.

Selon une caractéristique supplémentaire du dispositif de comptage, les détecteurs de particules sont agencés sous forme de matrice de détecteurs.

Selon encore une caractéristique supplémentaire, les détecteurs voisins d'un détecteur Dij situé à l'intersection de la ligne de rang i et de la colonne de rang j de la matrice de détecteurs sont les détecteurs Di (j-1), Di(j+1), D (i-1) j, D((i+1)j.

L'invention concerne également un procédé de lecture de matrice de détecteurs de particules, caractérisé en ce qu'il comprend, lorsqu'un premier détecteur détecte une particule, une étape d'inhibition d'au moins un deuxième détecteur de particules voisin du premier détecteur de particules.

Selon une caractéristique supplémentaire, le procédé de lecture comprend une étape pour évaluer si une première impulsion électrique (Va) délivrée par le premier détecteur de particules a une énergie prédéterminée et, si oui, pour ne pas mettre en oeuvre l'étape d'inhibition et ne pas compter la première impulsion électrique délivrée (Va) si le deuxième détecteur de particules détecte une particule dans une fenêtre temporelle de durée prédéterminée débutant avec la détection de la première particule par le premier détecteur.

Selon une caractéristique supplémentaire, l'énergie prédéterminée est une énergie de photon de fluorescence.

Brève description des figures

D'autres caractéristiques et avantages de l'invention apparaîtront à la lecture d'un mode de réalisation préférentiel fait en référence aux figures jointes, parmi lesquelles :

- la figure 1 représente un détecteur de particules qui délivre une information de comptage relative à un nombre de particules détectées selon l'art connu ;
- la figure 2 représente un dispositif de comptage de particules comprenant une pluralité de détecteurs de particules selon l'art connu ;

- la figure 3 représente un détecteur de particules selon l'invention ;

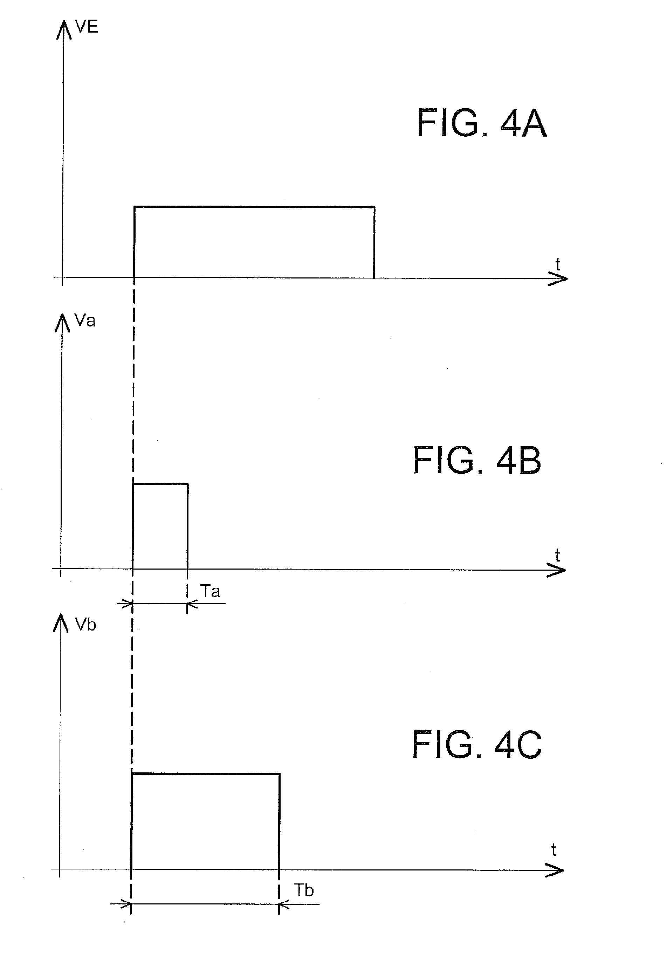

- les figures 4A, 4B, 4C représentent un exemple de signaux présents dans un détecteur de particules pour la mise en oeuvre de l' invention ;
- la figure 5 représente un perfectionnement du détecteur de particules représenté en figure 3.

Sur toutes les figures, les mêmes repères désignent les mêmes éléments.

Description détaillée de modes de mise en oeuvre de l'invention

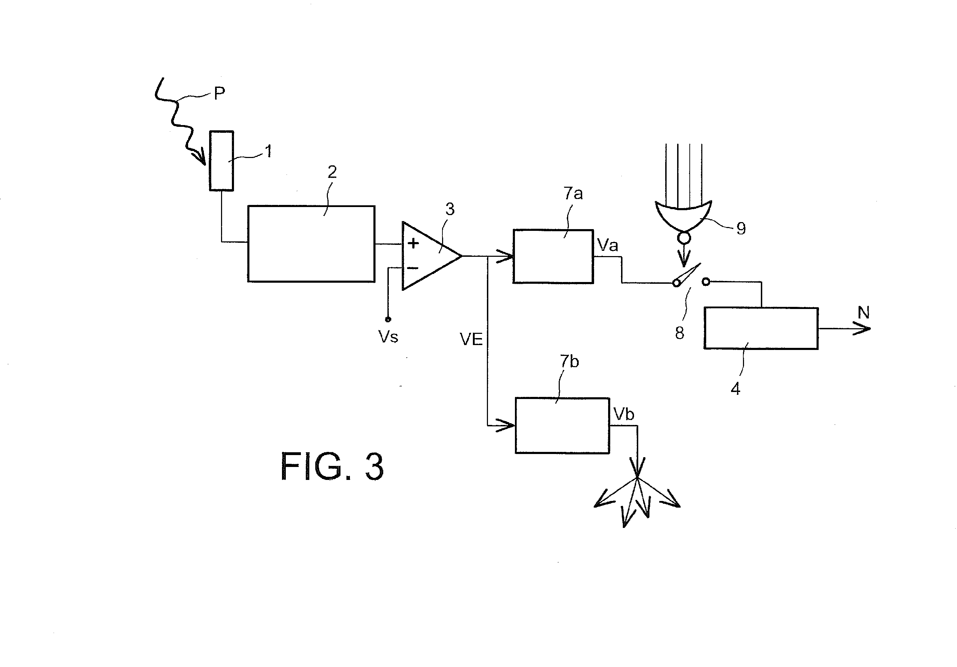

La figure 3 représente un détecteur de particules selon l'invention. En plus des éléments représentés en figure 1, le détecteur de particules comprend des moyens 7a et 7b pour former, respectivement, une première impulsion Va et une deuxième impulsion Vb à partir de l'impulsion électrique VE délivrée par le comparateur 3, un interrupteur 8 et un circuit de commande 9.

L'interrupteur 8 est placé en amont du compteur 4, entre la sortie du circuit 7a et l'entrée du compteur 4. La sortie du circuit de commande 9 délivre le signal de commande de l'interrupteur 8.

La première impulsion Va constitue un signal destiné à être compté par le compteur 4. La deuxième impulsion Vb constitue un signal d'inhibition de comptage transmis à un ou plusieurs détecteurs voisins. Les impulsions Va et Vb, formées à partir de l'impulsion électrique VE, ont des durées prédéterminées respectives Ta et Tb. Les impulsions VE, Va et Vb sont représentés, à titre d'exemple, sur les figures respectives 4A, 4B et 4C.

Le signal Va qui représente l'impulsion détectée est destiné à incrémenter le compteur 4. La durée Ta du signal Va est choisie relativement brève, tout en permettant que le signal Va soit pris en compte correctement par le compteur 4 (la durée Ta peut ainsi, par exemple, être égale à 5ns). Le signal Vb constitue un signal « fenêtre » destiné à inhiber la détection des pixels voisins afin d'empêcher ces derniers de détecter la particule qui est détectée par l'impulsion électrique Va. A cette fin, la durée Tb de l'impulsion d'inhibition formée dans un pixel détecteur donné est supérieure à la durée Ta des impulsions de détection formées dans les pixels détecteurs voisins. La durée Tb est ainsi telle que :

$$Tb \geq Tr + Ta + Td,$$

où

- Ta est la durée de l'impulsion Va du ou des pixel (s) voisin (s) ;
- Tr est le retard estimé maximum que peut avoir la détection d'un pixel voisin lorsqu'il détecte une fraction des charges correspondant à la même particule ;
- Td est un facteur de sécurité prenant en compte les dispersions technologiques des détecteurs de particules.

Bien que relativement « longue », la durée Tb est choisie suffisamment « courte » pour que les pixels voisins soient remis le plus rapidement possible en état de comptage de nouvelles particules. Pour un pixel dont la durée Ta est égale à 5ns (cf. ci-dessus),la durée Tb peut alors être égale, par exemple, à 20ns.

Le signal Tb est transmis aux détecteurs voisins, c'est-à-dire, par exemple, aux détecteurs situés sur les quatre côtés d'un détecteur (respectivement en haut, en bas, à droite et à gauche du détecteur dans le cas de détecteurs regroupés sous forme de matrice). Il est également possible de définir tout autre voisinage, incluant, en particulier, les pixels dans les directions obliques.

De même qu'un pixel détecteur envoie le signal d'inhibition Tb vers p détecteurs voisins (par exemple p=4), de même, il reçoit p signaux d'inhibition en provenance de ces mêmes p détecteurs voisins. Les p signaux d'inhibition provenant des détecteurs voisins constituent les signaux d'entrée du circuit de commande 9 dont le signal de sortie commande l'interrupteur 8. Ainsi, dès qu'un détecteur voisin détecte une particule, l'interrupteur 8 s'ouvre, empêchant tout comptage du compteur 4.

Le circuit de commande 9 de l'interrupteur 8 est alors une porte « NON OU » (cas de la figure 3) lorsque l'interrupteur est passant quand il est piloté par un niveau logique 1. Dans le cas où c'est un niveau logique 0 qui rend passant l'interrupteur 8, le circuit de commande 9 est une porte « OU ».

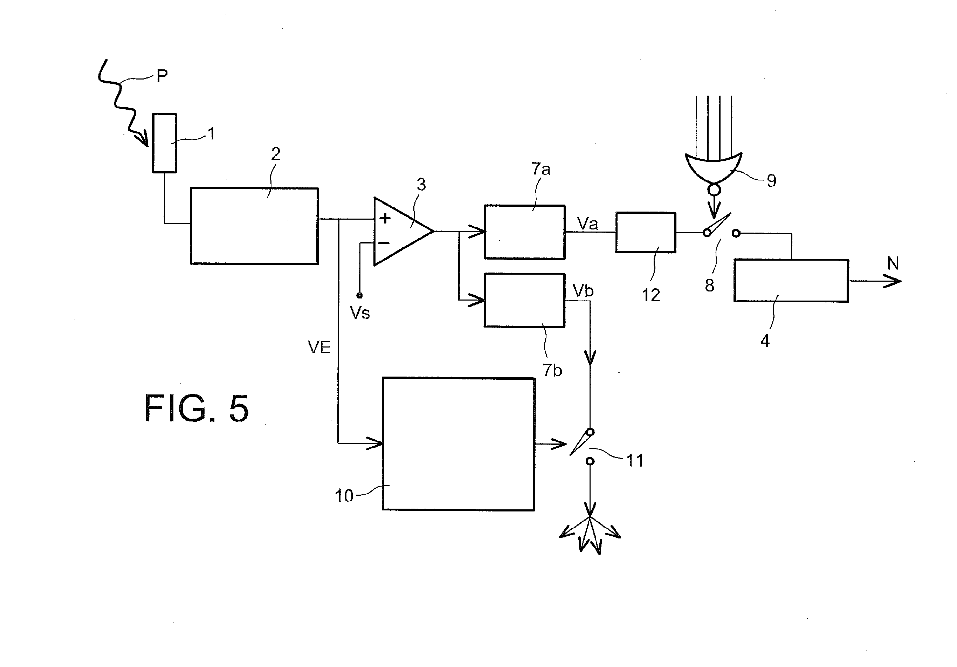

La figure 5 représente un perfectionnement du détecteur de particules représenté en figure 3.

Le détecteur selon le perfectionnement de la figure 5 permet de résoudre le problème de la détection de particules (rayons X) lié à l'existence de particules parasites d'énergie prédéterminée comme, par exemple, les photons de fluorescence.

Les photons de fluorescence sont générés dans la couche d'absorption où les photons X sont détectés. En fait, un photon X initial interagit avec un atome de la couche d'absorption en un premier endroit où il dépose une partie de son énergie. De façon quasi instantanée, l'atome émet ensuite un photon de désexcitation, dit photon de fluorescence, qui peut soit s'échapper de la couche d'absorption (et donc être perdu), soit être absorbé en un deuxième endroit, un peu plus loin dans la couche d'absorption.

Si le photon de fluorescence s'échappe, il n'est avantageusement pas détecté. Il suffit de faire en sorte que l'énergie déposée au premier endroit soit suffisante pour déclencher un comptage.

Si le photon de fluorescence est réabsorbé dans le même pixel détecteur, ce n'est pas un inconvénient puisque les charges déposées aux deux endroits sont finalement cumulées dans le même amplificateur de lecture.

Par contre, si le photon de fluorescence est absorbé dans la couche absorbante d'un pixel détecteur voisin, un risque de double détection peut alors apparaître. Le détecteur selon l'invention décrit précédemment retient le pixel qui détecte en premier et, partant, qui inhibe son voisin. Le plus souvent, le pixel détecteur le plus rapide est celui qui capte le plus d'énergie. Or, un photon de fluorescence a souvent une énergie plus élevée que celle qui est déposée par le photon initial. Le détecteur décrit ci-dessus retient donc plus souvent le point d'absorption du photon de fluorescence. C'est un moindre mal par rapport à un double comptage, mais c'est une erreur sur la localisation du photon détecté et la résolution spatiale du capteur s'en trouve dégradée.

Le perfectionnement de l'invention, décrit ci-dessous, permet avantageusement de choisir comme photon détecté le photon initial. Un détecteur selon le perfectionnement de l'invention est décrit en figure 5.

En plus des éléments décrits en figure 3, le détecteur selon le perfectionnement de l'invention comprend un deuxième interrupteur 11, un circuit d'évaluation 10 et un circuit de retard 12. Le deuxième interrupteur 11 est placé sur la sortie qui délivre le signal d'inhibition Vb. Le circuit d'évaluation 10 reçoit sur son entrée le signal délivré par le circuit de traitement 2 alors que le signal qu'il délivre constitue un signal de commande de l'interrupteur 11. Le circuit de retard 12 est placé entre la sortie du circuit 7a qui délivre le signal Va et l'interrupteur 8.

Le perfectionnement de l'invention est basé sur le fait que l'énergie des photons de fluorescence est une grandeur connue en fonction du matériau absorbant. A cette fin, le circuit 10 comprend un circuit mémoire dans lequel différentes valeurs d'amplitude de référence de photons de fluorescence sont mémorisées. Le signal VE délivré par le circuit de traitement 2 est alors comparé à ces différentes valeurs. Si l'évaluation de l'amplitude du signal VE conduit à identifier le photon détecté comme photon de fluorescence, le signal délivré par le circuit d'évaluation 10 commande l'ouverture de l'interrupteur 11. La transmission du signal d'inhibition Vb vers les pixels voisins est alors interdite, laissant ainsi une priorité de détection à ces pixels voisins.

Le circuit de retard 12 a pour fonction d'ajouter un délai dans la transmission de l'impulsion Va qui représente le photon de fluorescence. Ce délai donne le temps aux pixels détecteurs voisins de transmettre au moins une impulsion de commande au circuit de commande 9. Sous l'action de la commande délivrée par le circuit 9, l'interrupteur 8 s'ouvre, empêchant ainsi le comptage de l'impulsion Va qui représente le photon de fluorescence. Toutefois, si aucun ordre d'inhibition ne parvient des pixels détecteurs voisins, l'impulsion Va est comptée.

Il faut noter que le perfectionnement de l'invention ne peut être raisonnablement mis en oeuvre que si l'élément 1 et les circuits de traitement 2 et 3 sont de suffisamment bonne qualité pour que l'amplitude de l'impulsion délivrée par le circuit de traitement 2 puisse être considérée comme représentative du dépôt d'énergie du photon détecté.

## Revendications

**1.** Détecteur de particules comprenant des moyens (1, 2, 3, 7a) pour délivrer une première impulsion électrique (Va) à partir d'une particule détectée, et des moyens de comptage (4) de premières impulsions électriques ainsi délivrées, **caractérisé en ce qu'**il comprend :

- des moyens (7b) pour créer, à partir d'une particule détectée, une deuxième impulsion électrique (Vb) constituant un signal d'inhibition de détection transmis à au moins un détecteur voisin pour empêcher que le détecteur voisin ne détecte la particule détectée qui correspond à la première impulsion électrique délivrée (Va), et
- des moyens (8, 9) permettant d'inhiber la détection de particules sous l'action d'un signal d'inhibition provenant d'au moins un détecteur voisin.

**2.** Détecteur de particules selon la revendication 1, **caractérisé en ce que** les moyens (8, 9) pour inhiber la détection de particules comprennent :

- un premier interrupteur (8) monté en amont des moyens de comptage (4), et
- un circuit de commande (9) qui délivre un signal de commande du premier interrupteur (8) en fonction de signaux d'inhibition provenant de détecteurs voisins.

**3.** Détecteur de particules selon la revendication 2, **caractérisé en ce que** le circuit de commande (9) est une porte logique « NON OU » ou « OU » sur les entrées de laquelle sont appliquées les signaux d'inhibition provenant de détecteurs voisins.

**4.** Détecteur de particules selon l'une quelconque des revendications précédentes, **caractérisé en ce qu'**il comprend :

- des moyens (10, 11) pour empêcher la transmission du signal d'inhibition (Vb) vers le détecteur voisin si la première impulsion électrique délivrée (Va) correspond à une énergie prédéterminée, et
- des moyens (12) pour interdire le comptage de la première impulsion électrique délivrée qui correspond à l'énergie prédéterminée, sous l'action d'un signal d'inhibition issu d'un détecteur voisin et reçu dans une fenêtre temporelle de durée prédéterminée débutant avec la détection de la première impulsion électrique (Va).

5. Détecteur de particules selon la revendication 4, **caractérisé en ce que** les moyens (10, 11) pour empêcher la transmission du signal d'inhibition vers le détecteur voisin comprennent :

   - un deuxième interrupteur (11) qui reçoit sur une première borne la deuxième impulsion électrique (Vb) et dont une deuxième borne est reliée à au moins une entrée d'au moins un circuit de commande (9) d'un détecteur voisin, et
   - un circuit d'évaluation (10) de l'énergie prédéterminée dont le signal de sortie constitue un signal de commande du deuxième interrupteur (11),

   et **en ce que** les moyens (12) pour interdire le comptage de la première impulsion (Va) comprennent des moyens de retard placés en amont du premier interrupteur (8).

6. Détecteur de particules selon l'une des revendications 4 ou 5, **caractérisé en ce que** l'énergie prédéterminée est une énergie de photon de fluorescence.

7. Détecteur de particules selon l'une quelconque des revendications précédentes, **caractérisé en ce que** la deuxième impulsion électrique (Vb) a une durée (Tb) supérieure à la durée (Ta) de la première impulsion électrique (Va).

8. Dispositif de comptage de particules comprenant une pluralité de détecteurs de particules, **caractérisé en ce que** les détecteurs de particules sont des détecteurs selon l'une quelconque des revendications 1 à 7.

9. Dispositif de comptage de particules selon la revendication 8, **caractérisé en ce que** les détecteurs de particules sont agencés sous forme de matrice de détecteurs.

10. Dispositif de comptage selon la revendication 9, **caractérisé en ce que** les détecteurs voisins d'un détecteur $D_{ij}$ situé à l'intersection de la ligne de rang i et de la colonne de rang j de la matrice de détecteurs sont les détecteurs $D_{i(j-1)}$, $D_{i(j+1)}$, $D_{(i-1)j}$, $D_{((i+1)j}$.

11. Procédé de lecture de matrice de détecteurs de particules, **caractérisé en ce qu'**il comprend, lorsqu'un premier détecteur détecte une particule, une étape d'inhibition d'au moins un deuxième détecteur de particules voisin du premier détecteur de particules.

12. Procédé de lecture selon la revendication 11, **caractérisé en ce qu'**il comprend une étape pour évaluer si une première impulsion électrique (Va) délivrée par le premier détecteur de particules a une énergie prédéterminée et, si oui, pour ne pas mettre en oeuvre l'étape d'inhibition et ne pas compter la première impulsion électrique délivrée (Va) si le deuxième détecteur de particules détecte une particule dans une fenêtre temporelle de durée prédéterminée débutant avec la détection de la première particule par le premier détecteur.

13. Procédé de lecture selon la revendication 12, **caractérisé en ce que** l'énergie prédéterminée est une énergie de photon de fluorescence.

**FIG. 1**

FIG. 2

FIG. 3

EP 1 427 189 A1

FIG. 4A

FIG. 4B

FIG. 4C

10

FIG. 5

EP 1 427 189 A1

| | Office européen des brevets | RAPPORT DE RECHERCHE EUROPEENNE | Numéro de la demande EP 03 10 4363 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 561 287 A (JARED DAVID A ET AL) 1 octobre 1996 (1996-10-01) | 11 | H04N5/217 |
| Y | * colonne 1, ligne 32 * * colonne 4, ligne 8 - ligne 19 * * figure 3 * --- | 1,8,9 | |
| Y | FR 2 803 916 A (BIOSPACE INSTR) 20 juillet 2001 (2001-07-20) * page 2, ligne 10 - page 3, ligne 3 * * page 9, ligne 3 - ligne 34 * * figure 3 * --- | 1,8,9 | |
| X | US 5 937 027 A (GLASSER FRANCIS ET AL) 10 août 1999 (1999-08-10) * colonne 6, ligne 36 - ligne 50 * * colonne 7, ligne 37 - colonne 8, ligne 34 * * colonne 9, ligne 62 - colonne 10, ligne 30 * * figure 6 * --- | 11 | |
| A | US 6 329 658 B1 (CHAPUIS ALAIN ET AL) 11 décembre 2001 (2001-12-11) * colonne 1, ligne 54 - colonne 2, ligne 67 * * colonne 4, ligne 21 - ligne 27 * * colonne 5, ligne 23 - ligne 28 * * colonne 7, ligne 48 - colonne 8, ligne 67 * * figures 2A-2C * --- -/-- | 1,11 | DOMAINES TECHNIQUES RECHERCHES (Int.Cl.7) H04N G01T |

Le présent rapport a été établi pour toutes les revendications

| Lieu de la recherche | Date d'achèvement de la recherche | Examinateur |
|---|---|---|
| LA HAYE | 16 mars 2004 | Didierlaurent, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

12

**Office européen**

**des brevets**

# RAPPORT DE RECHERCHE EUROPEENNE

Numéro de la demande

EP 03 10 4363

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 369 389 B1 (BERLAD GIDEON ET AL) 9 avril 2002 (2002-04-09) * colonne 1, ligne 30 - ligne 65 * * colonne 11, ligne 44 - colonne 12, ligne 42 * * colonne 17, ligne 14 - ligne 35 * * figure 1 * | 1,11 | |
| A | FR 2 755 816 A (COMMISSARIAT ENERGIE ATOMIQUE) 15 mai 1998 (1998-05-15) * page 22, ligne 14 - page 24, ligne 5 * | 1,11 | |
| A | WO 01 69284 A (PLANMED OY ;STROEMMER PEKKA (FI)) 20 septembre 2001 (2001-09-20) * page 8, ligne 28 - page 9, ligne 14 * * figures 2,3 * | 1 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 16 mars 2004 | Didierlaurent, P |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 10 4363

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2004

| Document brevet cité au rapport de recherche | | Date de publication | Membre(s) de la famille de brevet(s) | | Date de publication |
|---|---|---|---|---|---|
| US 5561287 | A | 01-10-1996 | AUCUN | | |
| FR 2803916 | A | 20-07-2001 | US | 2003122084 A1 | 03-07-2003 |
| | | | FR | 2803916 A1 | 20-07-2001 |
| US 5937027 | A | 10-08-1999 | FR | 2750821 A1 | 09-01-1998 |
| | | | DE | 69711124 D1 | 25-04-2002 |
| | | | DE | 69711124 T2 | 10-10-2002 |
| | | | EP | 0817472 A1 | 07-01-1998 |
| US 6329658 | B1 | 11-12-2001 | FR | 2759837 A1 | 21-08-1998 |
| | | | EP | 0960526 A2 | 01-12-1999 |
| | | | WO | 9836579 A2 | 20-08-1998 |
| | | | JP | 2001513192 T | 28-08-2001 |
| US 6369389 | B1 | 09-04-2002 | WO | 9823973 A1 | 04-06-1998 |
| | | | US | 5689115 A | 18-11-1997 |
| | | | JP | 2001516446 T | 25-09-2001 |
| | | | CA | 2191174 A1 | 25-05-1997 |
| | | | DE | 19648211 A1 | 28-05-1997 |
| | | | FR | 2741723 A1 | 30-05-1997 |
| | | | JP | 9178860 A | 11-07-1997 |
| FR 2755816 | A | 15-05-1998 | FR | 2755816 A1 | 15-05-1998 |
| | | | EP | 0938685 A1 | 01-09-1999 |
| | | | WO | 9821606 A1 | 22-05-1998 |
| | | | JP | 2001503526 T | 13-03-2001 |
| WO 0169284 | A | 20-09-2001 | FI | 20000592 A | 15-09-2001 |
| | | | AU | 4658101 A | 24-09-2001 |
| | | | EP | 1266241 A1 | 18-12-2002 |
| | | | WO | 0169284 A1 | 20-09-2001 |
| | | | JP | 2003527610 T | 16-09-2003 |
| | | | US | 2003035510 A1 | 20-02-2003 |

EPO FORM P0460

Pour tout renseignement concernant cette annexe : voir Journal Officiel de l'Office européen des brevets, No.12/82